# EUROPEAN PATENT SPECIFICATION

(11) **EP 3 496 508 B1**
(45) Date of publication and mention of the grant of the patent: **12.10.2022**
(21) Application number: 17837009.4
(22) Date of filing: 02.08.2017
(51) Int. Cl.: H04W 88/02, H04W 8/22, H04W 16/28, H04B 7/0417, H04W 72/08

(54) **USER TERMINAL AND WIRELESS COMMUNICATION METHOD**
BENUTZERENDGERÄT UND DRAHTLOSKOMMUNIKATIONSVERFAHREN
TERMINAL D'UTILISATEUR ET PROCÉDÉ DE COMMUNICATION SANS FIL

(30) Priority: 03.08.2016 JP 2016152974
(43) Date of publication of application: 12.06.2019
(73) Proprietor: NTT DOCOMO, INC., Chiyoda-ku Tokyo 100-6150 (JP)
(72) Inventor: OSAWA, Ryosuke, Tokyo 100-6150 (JP); HARADA, Hiroki, Tokyo 100-6150 (JP); KAKISHIMA, Yuichi, Palo Alto California 94304 (US)
(74) Representative: Hoffmann Eitle
(86) International application number: PCT/JP2017/028018
(87) International publication number: WO 2018/025907

(56) References cited:
- EP-A1- 2 819 313
- WO-A1-2009/023860
- WO-A1-2015/020290
- JP-A- 2014 158 106
- US-A1- 2014 362 744
- KEISUKE ISHII: "5G no kakushin gijutsu masshivu MIMO = [Core technology of 5 G Massive MIMO]", NIKKEI ELECTRONICS, 10 November 2014 (2014-11-10), pages 73-82, XP009514533, ISSN: 0385-1680

## Description

### Technical Field

The present invention relates to a user terminal, a base station and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower latency and so on (see non-patent literature 1). Also, the specifications of LTE-A (also referred to as "LTE-advanced," "LTE Rel. 10," "LTE Rel. 11" or "LTE Rel. 12") have been drafted for further broadbandization and increased speed beyond LTE (also referred to as "LTE Rel. 8" or "LTE Rel. 9"), and successor systems of LTE (also referred to as, for example, "FRA (Future Radio Access)," "5G (5th generation mobile communication system)," "NR (New Radio)," "NX (New radio access)," "FX (Future generation radio access)," "LTE Rel. 13," "LTE Rel. 14," "LTE Rel. 15" and/or later versions) are under study.

In LTE Rel. 10/11, carrier aggregation (CA) to integrate multiple component carriers (CC) is introduced in order to achieve broadbandization. Each CC is configured with the system bandwidth of LTE Rel. 8 as one unit. In addition, in CA, multiple CCs under the same radio base station (eNB (eNodeB)) are configured in a user terminal (UE (User Equipment)).

Meanwhile, in LTE Rel. 12, dual connectivity (DC), in which multiple cell groups (CGs) formed by different radio base stations are configured in UE, is also introduced. Each cell group is comprised of at least one cell (CC). Since multiple CCs of different radio base stations are integrated in DC, DC is also referred to as "inter-eNB CA."

Also, in LTE Rel. 8 to 12, frequency division duplex (FDD), in which downlink (DL) transmission and uplink (UL) transmission are made in different frequency bands, and time division duplex (TDD), in which downlink transmission and uplink transmission are switched over time and take place in the same frequency band, are introduced.

WO 2009023860 A1 relates to a technique for sending multiple-input multiple-output transmissions in wireless communication systems. In one design, a transmitter sends a first reference signal via a first link, e.g., a cell-specific reference signal via the downlink. The transmitter receives channel quality indicator (CQI) information determined by a receiver based on the first reference signal. The transmitter also receives a second reference signal from the receiver via a second link, e.g., a sounding reference signal via the uplink. The transmitter obtains at least one MIMO channel matrix for the first link based on the second reference signal. The transmitter determines at least one precoding matrix based on the at least one MEMO channel matrix, e.g., in accordance with ideal eigen-beamforming or pseudo eigen-beamforming. The transmitter then sends a data transmission to the receiver based on the at least one precoding matrix and the CQI information.

EP 2819313 A1 relates to a multi-input and multi-output communication method in a large-scale antenna system. An MIMO transmission method according to the present invention includes obtaining statistical channel information on at least one terminal, dividing terminals into a plurality of classes and a plurality of groups based on the statistical channel information wherein the groups depend on the classes, determining a group beam-forming matrix for each of the divided groups, performing a group beamforming transmission by group based on the group beam-forming matrix to obtain instantaneous channel information and scheduling terminals based on the instantaneous channel information.

### Citation List

### Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall description; Stage 2"

### Summary of Invention

### Technical Problem

Future radio communication systems (for example, 5G, NR, etc.) are anticipated to realize various radio communication services so as to fulfill varying requirements (for example, ultra-high speed, large capacity, ultra-low latency, etc.).

For example, in 5G, researches have been made to provide radio communication services, referred to as "eMBB (enhanced Mobile Broad Band)," "IoT (Internet of Things)," "MTC (Machine Type Communication)," "M2M (Machine To Machine)," and "URLLC (Ultra Reliable and Low Latency Communications)." Note that M2M may be referred to as "D2D (Device To Device)," "V2V (Vehicle To Vehicle)," and so on, depending on what communication device is used. To fulfill the requirements for various types of communication such as listed above, studies are in progress to design new communication access schemes (new RAT (Radio Access Technology).

For 5G, a study is underway to provide services using a very high carrier frequency of 100 GHz, for example. Generally speaking, it becomes more difficult to secure coverage as the carrier frequency increases. Reasons for this include that the distance-induced attenuation becomes more severe and the rectilinearity of radio waves becomes stronger, the transmission power density decreases because ultra-wideband transmission is carried out, and so on.

Therefore, in order to fulfill the requirements for various types of communication such as mentioned above even in high frequency bands, a study is in progress to use massive MIMO (Multiple Input Multiple Output), which uses a very large number of antenna elements. When a very large number of antenna elements are used, beams (antenna directivities) can be formed by controlling the amplitude and/or the phase of signals transmitted/received in each element. This process is also referred to as "beamforming (BF)," and makes it possible to reduce the propagation loss of radio waves.

If UE has to form optimal transmitting beams, the UE then needs to learn information about uplink channels. For example, when an uplink channel and a downlink channel are correlated, such as when TDD is used, the downlink channel estimation value can be used for uplink channel estimation. However, even when an uplink channel and a downlink channel are correlated, if the UE's transmitter and receiver have different frequency characteristics (for example, different phase and/or amplitude characteristics), there is a possibility that inadequate beams are formed. Use of inappropriate beams might then lead to a decrease in throughput, a decrease in signal quality, and so on.

The present invention has been made in view of the above.

### Solution to Problem

The object of the invention is achieved by the subject-matter of the independent claims. Further examples are provided for facilitating the understanding of the invention.

A user terminal, according to one example useful for understanding the present invention, has a control section that controls formation of a beam for use in transmitting an uplink signal, and a transmission section that transmits information about a characteristic of a transmitter/receiver, and, after the information about the characteristic of the transmitter/receiver is transmitted, the control section determines whether the beam is formed based on downlink channel information or uplink channel information.

### Advantageous Effects of Invention

According to the present invention, it is possible to prevent the decrease of throughput suitably when communication is carried out using beamforming.

### Brief Description of Drawings

FIG. 1 is a diagram to show examples of BF processes by eNB and UE when the UE transmits UL signals;
FIG. 2 is a diagram to show examples of BF processes by eNB and UE when the eNB transmits DL signals;
FIG. 3 is a sequence diagram to show an example, in which UE forms transmitting beams based on downlink channel information;
FIG. 4 is a sequence diagram to show an example in which UE forms transmitting beams based on uplink channel information, based on characteristic information;
FIG. 5 is a diagram to show an example of a schematic structure of a radio communication system according to one embodiment of the present invention;
FIG. 6 is a diagram to show an example of an overall structure of a radio base station according to one embodiment of the present invention;
FIG. 7 is a diagram to show an example of a functional structure of a radio base station according to one embodiment of the present invention;
FIG. 8 is a diagram to show an example of an overall structure of a user terminal according to one embodiment of the present invention;
FIG. 9 is a diagram to show an example of a functional structure of a user terminal according to one embodiment of the present invention; and
FIG. 10 is a diagram to show an example hardware structure of a radio base station and a user terminal according to one embodiment of the present invention.

### Description of Embodiments

BF can be classified into digital BF and analog BF. Digital BF refers to a set of techniques where precoding signal processing is executed on baseband signals (for digital signals). In this case, the inverse fast Fourier transform (IFFT)/digital-to-analog conversion (DAC)/RF (Radio Frequency) are carried out in parallel processes, as many as the number of antenna ports (RF Chains). Meanwhile, it is possible to form a number of beams to match the number of RF chains at any arbitrary timing.

Analog BF refers to a set of techniques to apply phase shifters to RF signals. In this case, since it is only necessary to rotate the phase of RF signals, analog BF can be implemented with simple and inexpensive configurations, but it is not possible to form multiple beams at the same time.

To be more specific, when analog BF is used, each phase shifter can only form one beam at a time. Consequently, if a base station (for example, referred to as an "eNB (evolved Node B)," a "BS (Base Station)," and so on) has only one phase shifter, only one beam can be formed at a given time. It then follows that, when multiple beams are transmitted using analog BF alone, these beams cannot be transmitted simultaneously using the same resources, and the beams need to be switched, rotated and so on, over time.

Note that it is also possible to implement a hybrid BF configuration that combines digital BF and analog BF. While a study is on-going to introduce massive MIMO in future radio communication systems (for example, 5G), attempting to form an enormous number of beams with digital BF alone might lead to an expensive circuit structure. For this reason, it is more likely that a hybrid BF configuration will be used in 5G.

In order to enhance coverage by using BF, the base station needs to apply transmitting BF to all DL signals. Also, the base station needs to apply receiving BF to all UL signals. This is because, even if BF is applied to only part of the signals, other signals, to which BF is not applied, cannot be communicated properly between the base station and UEs.

Consequently, for example, when UE transmits UL signals, the base station attempts to receive the signals by applying different BFs on a regular basis (while sweeping the receiving beams). Preferably, the UE forms transmitting beams to suit the receiving beams of the base station.

Note that, when this specification mentions that a plurality of beams are different, this should be construed to mean that, for example, at least one of following (1) to (6), which applies to each of these multiple beams, is different: (1) the precoding; (2) the transmission power; (3) the phase rotation; (4) the beam width; (5) the beam angle (for example, the tilt angle); and (6) the number of layers, but these are by no means limiting. Note that, when the precoding varies, the precoding weight may vary, or the precoding scheme may vary (for example, linear precoding, non-linear precoding and so on). When linear precoding and non-linear precoding are applied to beams, the transmission power, the phase rotation, the number of layers and so on may also vary.

Examples of linear precoding include precoding based on zero-forcing (ZF) model, precoding based on regularized zero-forcing (R-ZF) model, precoding based on minimum mean square error (MMSE) model, and so on. Also, as for examples of non-linear precoding, there are types of precoding, including dirty paper coding (DPC), vector perturbation (VP), Tomlinson-Harashima precoding (THP), and so on. Note that these are by no means the only types of precoding that are applicable.

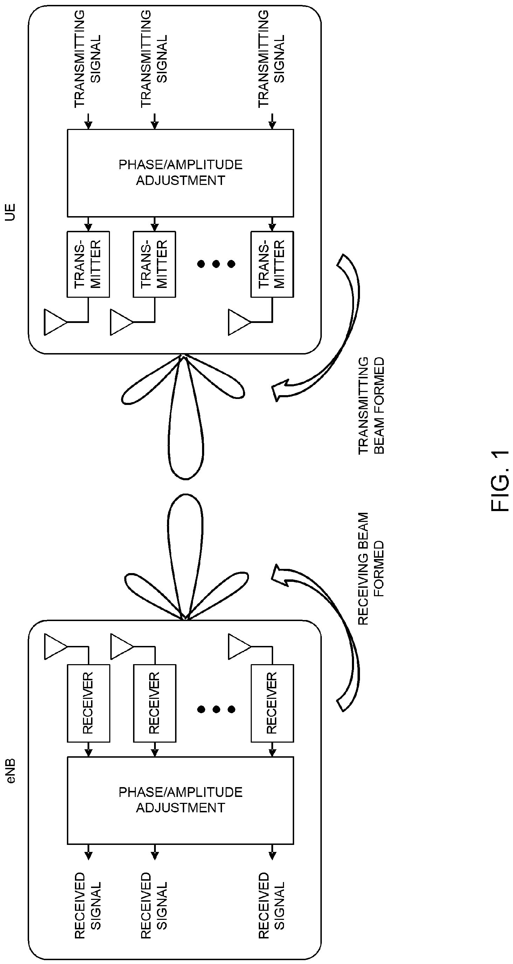

FIG. 1 is a diagram to show examples of BF processes by eNB and UE when the UE transmits UL signals. The UE adjusts the phase and amplitude of a transmitting signal, and transmits the adjusted signal from a plurality of transmitting antennas, via a transmitter. By this means, a transmitting beam is formed, and a UL signal is transmitted.

Meanwhile, the eNB adjusts the phase and amplitude of the signal received through a plurality of receiving antennas, via a receiver, and acquires a received signal. By this means, a receiving beam is formed, and the UL signal is received.

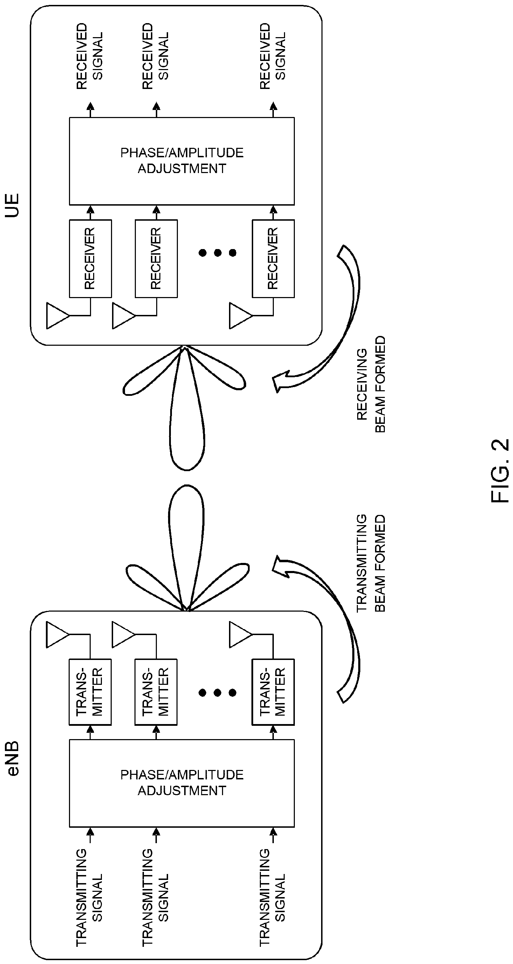

FIG. 2 is a diagram to show examples of BF processes by eNB and UE when the eNB transmits DL signals. This example is opposite to FIG. 1, and the eNB adjusts the phase and amplitude of a transmitting signal, and transmits the adjusted signal from a plurality of transmitting antennas, via a transmitter. By this means, a transmitting beam is formed, and a DL signal is transmitted.

Meanwhile, the UE adjusts the phase and amplitude of the signal received through the plurality of receiving antennas via the receiver, and obtains a received signal. By this means, a receiving beam is formed, and the DL signal is received.

Now, in order to form optimal transmitting beams, the transmitting end needs to adjust the phase and amplitude based on information about the channels between the transmitting end and the receiving end (for example, channel state information (CSI), information about the channel matrix, etc.). To allow UE to form transmitting beams, uplink channel information is needed, and, to allow eNB to form transmitting beams, downlink channel information is needed.

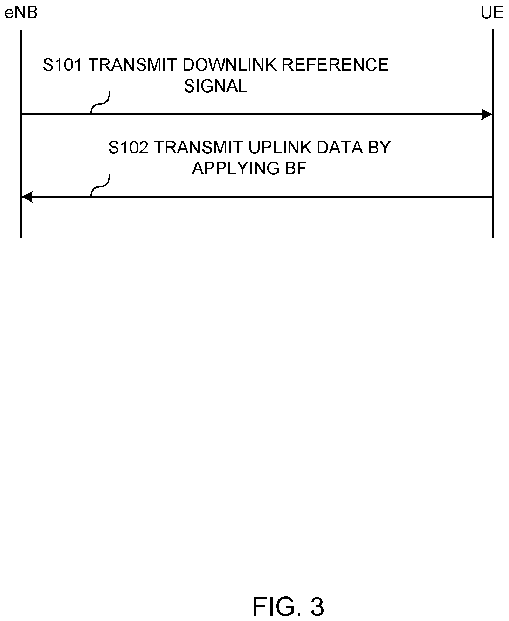

If uplink channels and downlink channels are correlated (for example, when TDD is used), downlink channel information can be used as uplink channel information. FIG. 3 is a sequence diagram to explain an example, in which UE forms transmitting beams based on downlink channel information.

The eNB transmits a downlink reference signal at a predetermined timing (step S101). This downlink reference signal may be a cell-specific reference signal (CRS), a channel state information-reference signal (CSI-RS) and/or the like, or may be a reference signal that is set forth apart (for example, a beam-specific reference signal (BRS), which is specific to a beam (which varies per beam)).

Note that information related to these downlink reference signals (for example, information about the resources used to transmit the downlink reference signals) may be reported to UE in advance by using high layer signaling (for example, RRC (Radio Resource Control) signaling, broadcast information (MIB (Master Information Block), SIBs (System Information Blocks), etc.)), physical layer signaling (for example, downlink control information (DCI)), or a combination of these.

After the UE measures the downlink reference signals of step S101 and acquires downlink channel information by performing channel estimation and/or other processes, the UE forms a transmitting beam based on this downlink channel information, and transmits UL signals (for example, UL data signal) (step S102).

However, even if the transmitter and the receiver of the base station have equal frequency characteristics (for example, phase and/or amplitude characteristics) and uplink channels and downlink channels are correlated, if the frequency characteristics of the UE's transmitter and the receiver are different, the problem arises where, as in above step S102, inadequate transmitting beams may be formed using downlink channel information. Use of inappropriate beams leads to a decrease in throughput, a decrease in signal quality, and so on.

So, the present inventors have worked on a method of judging whether or not UE's transmitting beams can be formed properly based on predetermined channel information (for example, downlink channel information), and arrived at the present invention.

Now, embodiments of the present invention will be described in detail below with reference to the accompanying drawings. The radio communication methods according to individual embodiments may be applied individually or may be applied in combination.

### (Radio Communication Method)

In one embodiment of present invention, UE transmits information about its transmitter/receiver characteristics (hereinafter simply referred to as "characteristic information") to the base station. Based on this characteristic information, the base station judges whether the UE can form transmitting beams based on downlink channel information. If the base station judges that the UE can, the UE can form appropriate transmitting beams by performing processes such as those shown in FIG. 3. On the other hand, if the base station judges that the UE cannot, control may be exerted so that the UE acquires uplink channel information.

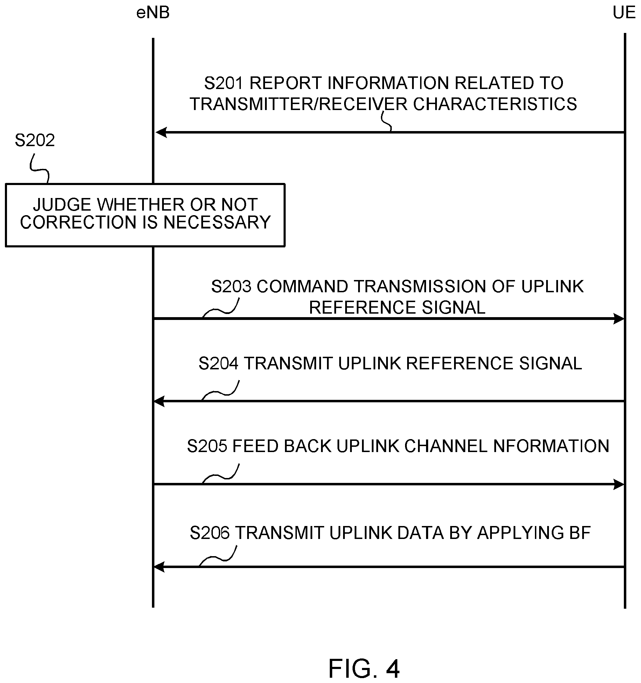

FIG. 4 is a sequence diagram to show an example in which UE forms transmitting beams using uplink channel information, based on characteristic information.

The UE transmits information about the characteristics of the transmitter/receiver (characteristic information), to the base station (step S201). The characteristic information may be information to represent the degree of difference between the frequency characteristics (for example, phase and/or amplitude characteristics) of the transmitter and the receiver. For example, the characteristic information may be one-bit information to represent that "the frequency characteristics of the transmitter and the frequency characteristics of the receiver are equal," or that "the frequency characteristics of the transmitter and the frequency characteristics of the receiver are different." Note that, when the difference between the frequency characteristics of the two is equal to or less than a predetermined threshold, these frequency characteristics may be considered equal, and, when the difference between the frequency characteristics of the two is greater than the predetermined threshold, these frequency characteristics may be considered different.

Also, the characteristic information may provide information to represent the above-noted degrees of difference in levels, in categories, or in relative values with respect to the characteristics of one. These levels, categories and/or the like may represent individual divisions when the above-noted differences are classified based on the magnitude of difference and so on. When the characteristic information is provided in levels, categories and/or others, associations (table) between the levels and/or categories and the degrees of difference in frequency characteristics are shared for use between the UE and the eNB. Information about the associations may be reported between the UE and the eNB.

Also, information about the frequency characteristics of the transmitter and information about the frequency characteristic of the receiver may be transmitted as characteristic information. Based on this information, the eNB can determine the degree of difference in frequency characteristics, between the transmitter and the receiver of the UE.

Note that step S201 may be carried out, for example, during the period in which the UE gains initial access to the eNB (during random access procedures), or after RRC connection is established.

The eNB determines whether correction is necessary (whether uplink channel estimation is necessary) based on the difference between the transmitter and the receiver of the UE in frequency characteristics (step S202). When there is no difference in frequency characteristics between the transmitter and the receiver of the UE, or when differences are present but are equal to or less than a predetermined value, the eNB can judge that correction is unnecessary, and skip the subsequent steps. Note that way of judging whether or not correction is necessary is not limited to these examples.

In step S202, if correction is judged necessary, the eNB indicates the UE to transmit an uplink reference signal (step S203). The transmission indication may be reported through higher layer signaling (for example, RRC signaling, MAC (Medium Access Control) signaling, physical layer signaling (for example, DCI), or a combination of these.

Note that the transmission indication may contain information about the radio resources for transmitting the reference signal (for example, information about subframe indices, the number of subframes, PRB indices, the number of PRBs, antenna ports, etc.).

Upon receiving the transmission indication, the UE transmits an uplink reference signal at a predetermined timing (step S204). Note that this uplink reference signal may be a reference signal for channel measurement (for example, a UL-SRS (Uplink Sounding Reference Signal)), or may be a reference signal that is set forth apart (for example, a BRS (Beam-specific Reference Signal), which is specific to a beam (which varies per beam)).

Based on the uplink reference signal transmitted from the UE, the eNB derives uplink channel information, and feeds back this information to the UE (step S205).

For example, in step S205, the eNB may select, from the CSI obtained as uplink channel information, an appropriate precoding matrix indicator (PMI), a precoding type indicator (PTI), a rank indicator (RI), and/or others, and report these to the UE.

Also, in step S205, the eNB may feed back the quantized channel response value to the UE. Also, in step S205, the eNB may perform transmission processes for the uplink reference signal received, and transmit the result to the UE in the downlink (analog feedback). The UE can estimate uplink channel information based on the received analog feedback signal and downlink channel information.

The UE forms transmitting beams based on this channel information, and transmits UL signals (for example, UL data signal) (step S206).

Note that the characteristic information may be configured per frequency band (for example, per component carrier, per subband, etc.). In this case, if, in step S202, it is judged that correction is needed in a plurality of frequency bands, uplink reference signals are transmitted in these multiple frequency bands (steps S203 and S204), and uplink channel information for the multiple frequency bands is fed back to the UE (step S205).

Also, the UE may exert control so as to form beams based on downlink channel information in some frequency bands, and form beams based on uplink channel information in other frequency bands (step S206).

According to the above-described embodiment, it is possible to execute appropriate beamforming, by allowing UEs (UEs that need correction) equipped with transmitters/receivers with different phase and amplitude characteristics to acquire uplink channel information. On the other hand, UEs that do not need correction can form uplink beams with minimal interaction as shown in FIG. 3.

### (Variations)

Note that the present invention is not limited to the case where UE's transmitter characteristics and receiver characteristics are different, and the present invention is applicable based on the above-described concept when eNB's transmitter characteristics and receiver characteristics are different, when the transmitter/receiver characteristics vary in both the UE and the eNB, and so on.

For example, the eNB may take into account its transmitter/receiver characteristics in addition to the UE's transmitter/receiver characteristics. For example, if, in step S202, the difference in frequency characteristics between the transmitter and the receiver of the UE is canceled out by the difference in frequency characteristics between the transmitter and the receiver of the eNB (for example, when the sum characteristics of the frequency characteristics of the UE's transmitter and the frequency characteristics of the eNB's receiver are the same as the sum characteristics of the frequency characteristics of the UE's receiver and the frequency characteristics of the eNB's transmitter), the eNB may judge that correction is not necessary.

Also, the above-described embodiment can be used to judge whether correction is needed for transmitting beams at the base station, by switching the operation of the eNB and the UE. For example, in FIG. 4, the eNB may transmit information about the characteristics of the eNB's transmitter/receiver to the UE (step S201'), and allow the UE to judge whether or not correction is needed (whether or not downlink channel estimation is necessary) (step S202'), or the UE may transmit a downlink reference signal transmission indication to the eNB (step S203'). Also, the eNB may judge whether transmitting beams are formed based on downlink channel information or based on uplink channel information, based on information about its own transmitter/receiver characteristics.

Also, the above-described embodiment may be used to control receiving beams at the UE and/or the eNB, in addition to controlling transmitting beams at the UE and/or the eNB. It then follows that the above-noted transmitting beams may be construed as receiving beams.

Note that, although the above embodiment has been described so that information about transmitter/receiver characteristics is reported from UE to eNB and the eNB acquires this information, this is by no means limiting. The eNB may hold information about the characteristics of the transmitter/receiver of the UE in advance.

For example, the eNB may know associations (such as a table) between the transmitter/receiver characteristics of the UE and predetermined information. Here, the predetermined information may be, for example, the UE identifier (UE-ID), the UE's terminal information (type name, model name, operating system version, etc.), International Mobile Equipment Identity (IMEI), and so on. Based on the predetermined information transmitted from the UE and the above associations, the eNB can learn the transmitter/receiver characteristics of the UE.

Information about the transmitter/receiver characteristics of the UE may be transmitted from the eNB to other eNBs. By this means, when a handover is made across eNBs, it is possible to exert control that takes into account the transmitter/receiver characteristics of the UE in advance.

Note that, although the above embodiment has been described so that eNB implicitly informs the UE whether to form beams based on downlink channel information or based on uplink channel information, by transmitting or not transmitting an uplink reference signal transmission indication and/or uplink channel information, this is by no means limiting.

For example, after the judgement in step S202 of FIG. 4, the eNB may report information as to whether beams are formed based on downlink channel information (DL CSI) or based on uplink channel information (UL CSI) (this information may be referred to as, for example, "CSI-specifying information for use in beamforming" and/or the like) to the eNB explicitly.

The CSI-specifying information may be reported by using higher layer signaling (for example, RRC signaling, MAC signaling (MAC control element (CE), etc.)), physical layer signaling (for example, DCI), or a combination of these. Based on the CSI-specifying information received, the UE can judge whether to form beams based on downlink channel information or uplink channel information.

### (Radio Communication System)

Now, the structure of the radio communication system according to one embodiment of the present invention will be described below. In this radio communication system, communication is performed using one or a combination of the radio communication methods according to the herein-contained embodiments of the present invention.

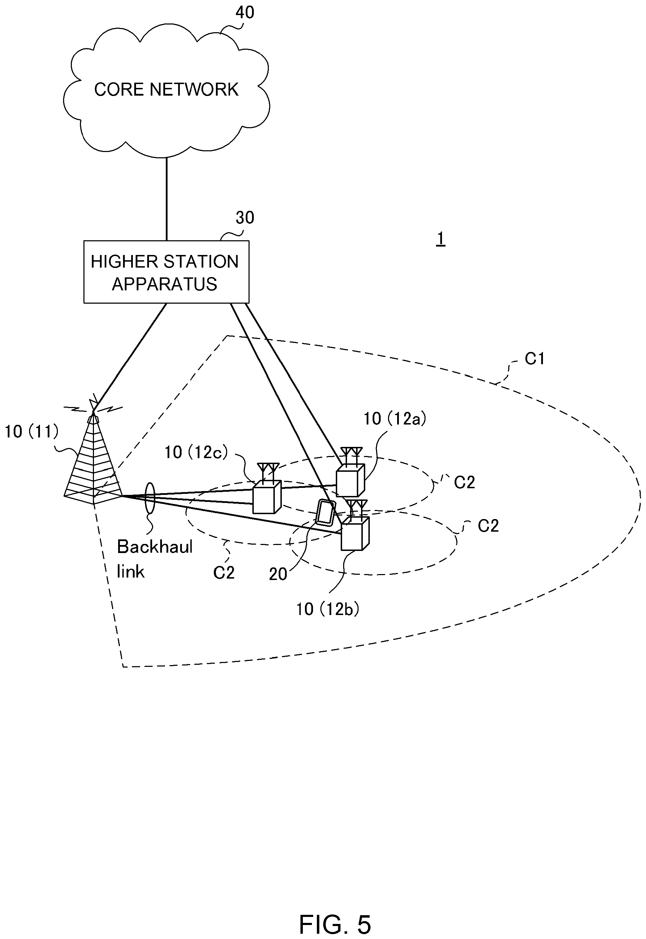

FIG. 5 is a diagram to show an example of a schematic structure of a radio communication system according to one embodiment of the present invention. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G, "IMT-Advanced," "4G (4th generation mobile communication system)," "5G (5th generation mobile communication system)," "FRA (Future Radio Access)," "New-RAT (Radio Access Technology)" and so on, or may be seen as a system to implement these.

The radio communication system 1 includes a radio base station 11 that forms a macro cell C1, and radio base stations 12a to 12c that are placed within the macro cell C1 and that form small cells C2, which are narrower than the macro cell C1. Also, user terminals 20 are placed in the macro cell C1 and in each small cell C2. The arrangement of cells and user terminals 20 are not limited to those shown in the drawings.

The user terminals 20 can connect with both the radio base station 11 and the radio base stations 12. The user terminals 20 may use the macro cell C1 and the small cells C2 at the same time by means of CA or DC. Furthermore, the user terminals 20 may apply CA or DC using a plurality of cells (CCs) (for example, five or fewer CCs or six or more CCs).

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the structure of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between two radio base stations 12).

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals (mobile stations) or stationary communication terminals (fixed stations).

In the radio communication system 1, as radio access schemes, orthogonal frequency division multiple access (OFDMA) is applied to the downlink, and single-carrier frequency division multiple access (SC-FDMA) is applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that uplink and downlink radio access schemes are not limited to the combination of these, and other radio access schemes may be used.

In the radio communication system 1, a downlink shared channel (PDSCH (Physical Downlink Shared CHannel)), which is used by each user terminal 20 on a shared basis, a broadcast channel (PBCH (Physical Broadcast CHannel)), downlink L1/L2 control channels and so on are used as downlink channels. User data, higher layer control information and SIBs (System Information Blocks) are communicated in the PDSCH. Also, the MIB (Master Information Block) is communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI), including PDSCH and PUSCH scheduling information, is communicated by the PDCCH. The number of OFDM symbols to use for the PDCCH is communicated by the PCFICH. HARQ (Hybrid Automatic Repeat reQuest) delivery acknowledgment information (also referred to as, for example, "retransmission control information," "HARQ-ACK," "ACK/NACK," etc.) in response to the PUSCH is transmitted by the PHICH. The EPDCCH is frequency-division-multiplexed with the PDSCH (downlink shared data channel) and used to communicate DCI and so on, like the PDCCH.

In the radio communication system 1, an uplink shared channel (PUSCH (Physical Uplink Shared CHannel)), which is used by each user terminal 20 on a shared basis, an uplink control channel (PUCCH (Physical Uplink Control CHannel)), a random access channel (PRACH (Physical Random Access CHannel)) and so on are used as uplink channels. User data, higher layer control information and so on are communicated by the PUSCH. Also, downlink radio quality information (CQI (Channel Quality Indicator)), delivery acknowledgement information and so on are communicated by the PUCCH. By means of the PRACH, random access preambles for establishing connections with cells are communicated.

In the radio communication system 1, cell-specific reference signals (CRSs), channel state information reference signals (CSI-RSs), demodulation reference signals (DMRSs), positioning reference signals (PRSs) and so on are communicated as downlink reference signals. Also, in the radio communication system 1, measurement reference signals (SRS (Sounding Reference Signal)), demodulation reference signal (DMRS) and so on are communicated as uplink reference signals. Note that the DMRS may be referred to as a "user terminal-specific reference signal (UE-specific Reference Signal)." Also, the reference signals to be communicated are by no means limited to these.

### (Radio Base Station)

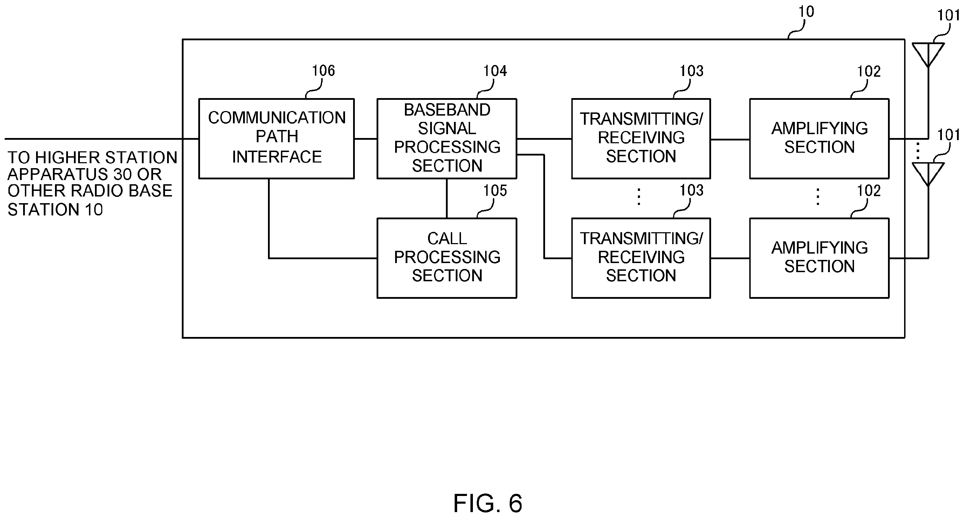

FIG. 6 is a diagram to show an example of an overall structure of a radio base station according to one embodiment of the present invention. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Note that the characteristics of the transmitter (transmitting section) and the receiver (receiving section) of the transmitting/receiving sections 103 may be different or the same.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing communication channels), manages the state of the radio base stations 10 and manages the radio resources.

The communication path interface section 106 transmits and receives signals to and from the higher station apparatus 30 via a predetermined interface. Also, the communication path interface 106 may transmit and receive signals (backhaul signaling) with other radio base stations 10 via an inter-base station interface (which is, for example, optical fiber that is in compliance with the CPRI (Common Public Radio Interface), the X2 interface, etc.).

Note that the transmitting/receiving sections 103 may furthermore have an analog beam forming section that forms analog beams. The analog beamforming section may be constituted by an analog beamforming circuit (for example, a phase shifter, a phase shifting circuit, etc.) or analog beamforming apparatus (for example, a phase shifting device) that can be described based on general understanding of the technical field to which the present invention pertains. Furthermore, the transmitting/receiving antennas 101 may be constituted by, for example, array antennas.

The transmitting/receiving sections 103 transmit signals, to which beamforming is applied, to the user terminal 20. Also, the transmitting/receiving sections 103 may transmit uplink channel information and/or uplink reference signal transmission indications to the user terminal 20. Furthermore, the transmitting/receiving sections 103 may transmit, to the user terminal 20, information as to whether beams are formed based on downlink channel information or uplink channel information (CSI-specifying information for use for beamforming).

The transmitting/receiving sections 103 receive signals, to which beamforming is applied, from the user terminal 20. In addition, the transmitting/receiving sections 103 may receive downlink channel information and/or downlink reference signal transmission indications from the user terminal 20.

In addition, the transmitting/receiving sections 103 may receive information about the characteristics of the transmitter/receiver of the user terminal 20 (characteristic information), from the user terminal 20. The characteristic information may be information to represent the difference in frequency characteristics (for example, phase and/or amplitude characteristics) between the transmitter and the receiver, or information to represent the degree of the difference.

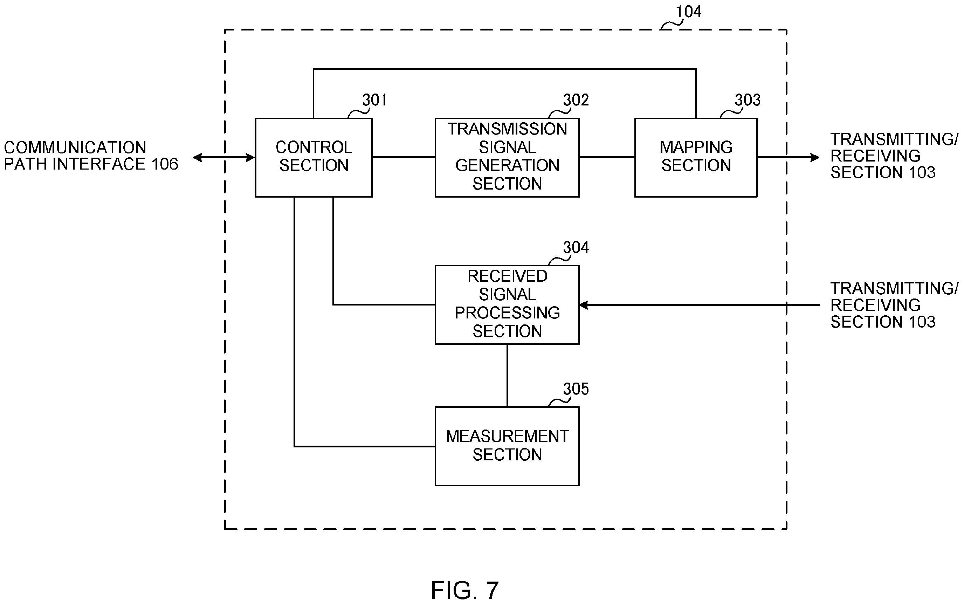

FIG. 7 is a diagram to show an example of a functional structure of a radio base station according to one embodiment of the present invention. Note that, although this example primarily shows functional blocks that pertain to characteristic parts of the present embodiment, the radio base station 10 has other functional blocks that are necessary for radio communication as well.

The baseband signal processing section 104 has a control section (scheduler) 301, a transmission signal generation section 302, a mapping section 303, a received signal processing section 304 and a measurement section 305. Note that these configurations have only to be included in the radio base station 10, and some or all of these configurations may not be included in the baseband signal processing section 104.

The control section (scheduler) 301 controls the whole of the radio base station 10. The control section 301 can be constituted by a controller, a control circuit or control apparatus that can be described based on general understanding of the technical field to which the present invention pertains.

The control section 301, for example, controls the generation of signals in the transmission signal generation section 302, the allocation of signals by the mapping section 303, and so on. Furthermore, the control section 301 controls the signal receiving processes in the received signal processing section 304, the measurements of signals in the measurement section 305, and so on.

The control section 301 controls the scheduling (for example, resource allocation) of downlink data signals that are transmitted in the PDSCH and downlink control signals that are communicated in the PDCCH and/or the EPDCCH. Also, the control section 301 controls the generation of downlink control signals (for example, delivery acknowledgement information and so on), downlink data signals and so on, based on whether or not retransmission control is necessary, which is decided in response to uplink data signals, and so on. Also, the control section 301 controls the scheduling of synchronization signals (for example, the PSS (Primary Synchronization Signal)/SSS (Secondary Synchronization Signal)), downlink reference signals (for example, the CRS, the CSI-RS, the DM-RS, etc.) and so on.

In addition, the control section 301 controls the scheduling of uplink data signals that are transmitted in the PUSCH, uplink control signals that are transmitted in the PUCCH and/or the PUSCH (for example, delivery acknowledgment information), random access preambles that are transmitted in the PRACH, uplink reference signals, and so on.

The control section 301 may exert control so that transmitting beams and/or receiving beams are formed using digital BF (for example, precoding) by the baseband signal processing section 104 and/or analog BF (for example, phase rotation) by the transmitting/receiving sections 103.

For example, the control section 301 may exert control so that, in a predetermined period (for example, in a sweep period), one or more beam-specific signals and/or channels (for example, beam-specific synchronization signals, beam-specific reference signals, beam-specific BCHs (broadcast signals), etc.) are swept and transmitted.

The control section 301 may also exert control so that information about the characteristics of the transmitter/receiver (characteristic information) is received from the user terminal 20. After the characteristic information is transmitted, the control section 301 may judge whether the user terminal 20 forms beams (transmitting beams and/or receiving beams) based on downlink channel information or uplink channel information. That is, the control section 301 may judge whether it is necessary to apply correction to the user terminal 20 (whether uplink channel estimation is required).

The control section 301 may inform the user terminal 20 whether to form beams based on downlink channel information or uplink channel information, by transmitting or not transmitting predetermined information.

For example, the control section 301 may transmit uplink reference signal transmission indications and/or uplink channel information to the user terminal 20, so as to allow the user terminal 20 to form beams based on this uplink channel information.

Also, the control section 301 may control the user terminal 20 to form beams based on downlink channel information, by not transmitting uplink channel information and/or uplink reference signal transmission indications to the user terminal 20 in a predetermined period (for example, in a predetermined period after the characteristic information is transmitted).

In addition, the control section 301 may transmit CSI-specifying information for use for beamforming to the user terminal 20, so as to allow the UE to specify the channel information for use for beamforming.

The control section 301 may control the user terminal 20 to transmit downlink reference signals (for example, CSI-RS) for downlink channel estimation.

The transmission signal generation section 302 generates downlink signals (downlink control signals, downlink data signals, downlink reference signals and so on) based on indications from the control section 301, and outputs these signals to the mapping section 303. The transmission signal generation section 302 can be constituted by a signal generator, a signal generating circuit or signal generating apparatus that can be described based on general understanding of the technical field to which the present invention pertains.

For example, the transmission signal generation section 302 generates DL assignments, which report downlink signal allocation information, and UL grants, which report uplink signal allocation information, based on indications from the control section 301. Also, the downlink data signals are subjected to the coding process, the modulation process and so on, by using coding rates and modulation schemes that are determined based on, for example, channel state information (CSI) from each user terminal 20.

The mapping section 303 maps the downlink signals generated in the transmission signal generation section 302 to predetermined radio resources based on indications from the control section 301, and outputs these to the transmitting/receiving sections 103. The mapping section 303 can be constituted by a mapper, a mapping circuit or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminal 20 (uplink control signals, uplink data signals, uplink reference signals, etc.). For the received signal processing section 304, a signal processor, a signal processing circuit or signal processing apparatus that can be described based on general understanding of the technical field to which the present invention pertains can be used.

The received signal processing section 304 outputs the decoded information, acquired through the receiving processes, to the control section 301. For example, when a PUCCH to contain an HARQ-ACK is received, the received signal processing section 304 outputs this HARQ-ACK to the control section 301. Also, the received signal processing section 304 outputs the received signals and/or the signals after the receiving processes to the measurement section 305.

The measurement section 305 conducts measurements with respect to the received signals. The measurement section 305 can be constituted by a measurer, a measurement circuit or measurement apparatus that can be described based on general understanding of the technical field to which the present invention pertains.

When signals are received, the measurement section 305 may measure, for example, the received power (for example, RSRP (Reference Signal Received Power)), the received quality (for example, RSRQ (Reference Signal Received Quality)), SINR (Signal to Interference plus Noise Ratio) and/or the like), uplink channel information (for example, CSI) and so on. The measurement results may be output to the control section 301.

### (User Terminal)

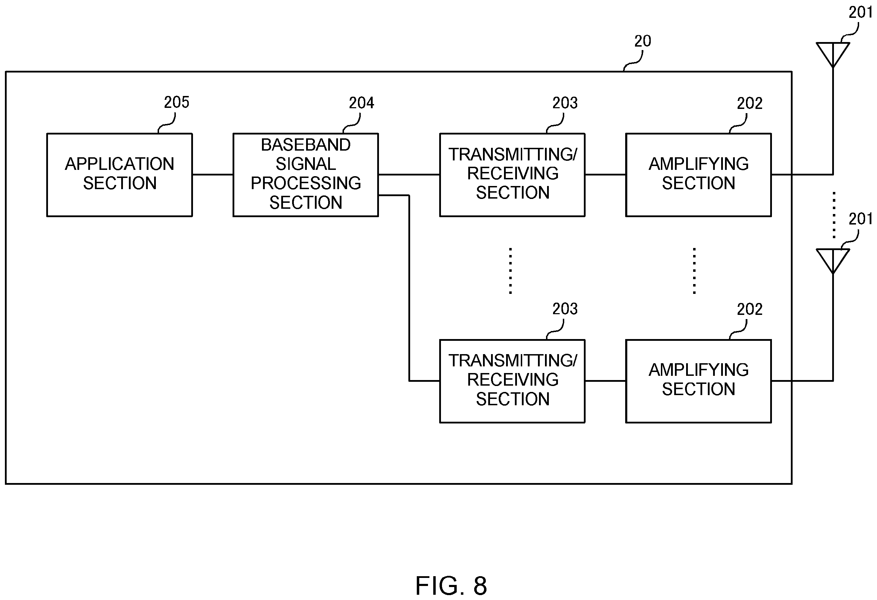

FIG. 8 is a diagram to show an example of an overall structure of a user terminal according to one embodiment of the present invention. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. A transmitting/receiving section 203 can be constituted by a transmitters/receiver, a transmitting/receiving circuit or transmitting/receiving apparatus that can be described based on general understanding of the technical field to which the present invention pertains. Note that a transmitting/receiving section 203 may be structured as a transmitting/receiving section in one entity, or may be constituted by a transmitting section and a receiving section.

Note that the characteristics of the transmitter (transmitting section) and the receiver (receiving section) of the transmitting/receiving sections 203 may be different or the same.

The baseband signal processing section 204 performs receiving processes for the baseband signal that is input, including an FFT process, error correction decoding, a retransmission control receiving process and so on. Downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving sections 203. Baseband signals that are output from the baseband signal processing section 204 are converted into a radio frequency band in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

Note that the transmitting/receiving sections 203 may furthermore have an analog beamforming section that forms analog beams. The analog beamforming section may be constituted by an analog beamforming circuit (for example, a phase shifter, a phase shifting circuit, etc.) or analog beamforming apparatus (for example, a phase shifting device) that can be described based on general understanding of the technical field to which the present invention pertains. Furthermore, the transmitting/receiving antennas 201 may be constituted by, for example, array antennas.

The transmitting/receiving sections 203 receive signals, to which beamforming is applied, from radio base station 10. In addition, the transmitting/receiving sections 203 may receive uplink channel information and/or uplink reference signal transmission indications from the radio base station 10. In addition, the transmitting/receiving section 203 may receive CSI-specifying information for use for beamforming, from the radio base station 10.

The transmitting/receiving sections 203 transmit signals, to which beamforming is applied, to the radio base station 10. In addition, the transmitting/receiving sections 203 may transmit downlink channel information and/or downlink reference signal transmission indications to the radio base station 10.

Also, the transmitting/receiving sections 203 may transmit information about the characteristics of the transmitter/receiver of the user terminal 20 (characteristic information) to the radio base station 10. The characteristic information may be information to represent the difference in frequency characteristics (for example, phase and/or amplitude characteristics) between the transmitter and the receiver, or information to represent the degree of the difference.

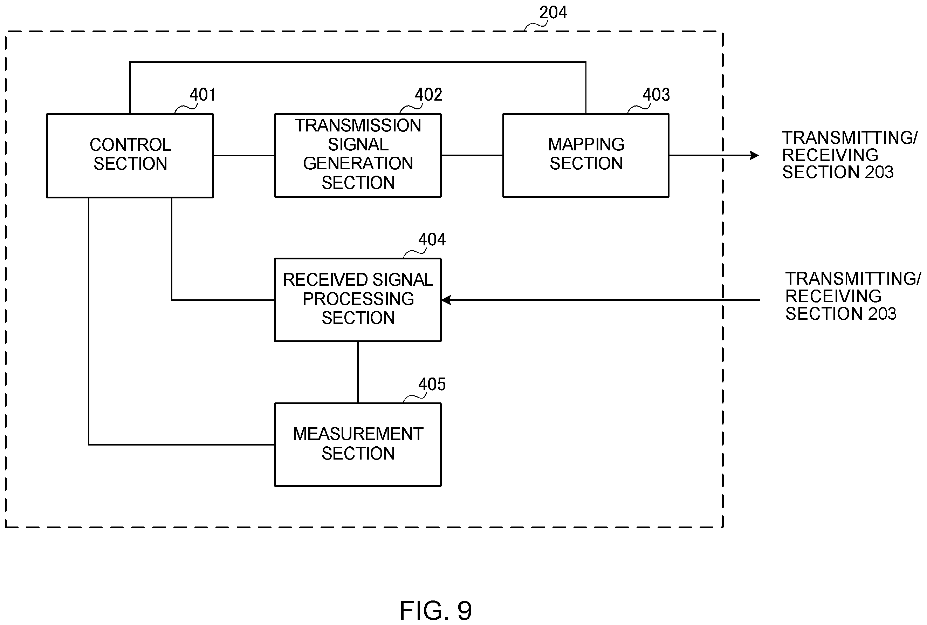

FIG. 9 is a diagram to show an example of a functional structure of a user terminal according to one embodiment of the present invention. Note that, although this example primarily shows functional blocks that pertain to characteristic parts of the present embodiment, the user terminal 20 has other functional blocks that are necessary for radio communication as well.

The baseband signal processing section 204 provided in the user terminal 20 at least has a control section 401, a transmission signal generation section 402, a mapping section 403, a received signal processing section 404 and a measurement section 405. Note that these configurations have only to be included in the user terminal 20, and some or all of these configurations may not be included in the baseband signal processing section 204.

The control section 401 controls the whole of the user terminal 20. For the control section 401, a controller, a control circuit or control apparatus that can be described based on general understanding of the technical field to which the present invention pertains can be used.

The control section 401, for example, controls the generation of signals in the transmission signal generation section 402, the allocation of signals by the mapping section 403, and so on. Furthermore, the control section 401 controls the signal receiving processes in the received signal processing section 404, the measurements of signals in the measurement section 405, and so on.

The control section 401 acquires the downlink control signals (signals transmitted in the PDCCH/EPDCCH) and downlink data signals (signals transmitted in the PDSCH) transmitted from the radio base station 10, via the received signal processing section 404. The control section 401 controls the generation of uplink control signals (for example, delivery acknowledgement information and so on) and/or uplink data signals based on whether or not retransmission control is necessary, which is decided in response to downlink control signals and/or downlink data signals, and so on.

The control section 401 may exert control so that transmitting beams and/or receiving beams are formed using the digital BF (for example, precoding) by the baseband signal processing section 204 and/or the analog BF (for example, phase rotation) by the transmitting/receiving sections 203.

Also, the control section 401 may exert control so that information about the characteristics of the transmitter/receiver (characteristic information) is transmitted. After the characteristic information is transmitted, the control section 401 may judge whether beams (transmitting beams and/or receiving beams) are formed based on downlink channel information or uplink channel information.

The control section 401 may judge whether beams are formed based on downlink channel information or uplink channel information, by acquiring or not acquiring predetermined information from the received signal processing section 404.

For example, when uplink channel information is received from the radio base station 10, the control section 401 may exert control so that beams are formed based on this uplink channel information. Also, the control section 401 may determine whether beams are formed based on downlink channel information or uplink channel information, based on information that is transmitted in the radio base station 10 in response to receipt of the characteristic information (for example, an uplink reference signal transmission indication that is transmitted after judgement is made based on the characteristic information).

Also, in the event no uplink channel information and/or uplink reference signal transmission indication is received from the radio base station 10 in a predetermined period (for example, in a predetermined period after the characteristic information is transmitted), the control section 401 may exert control so that beams are formed based on downlink channel information. This downlink channel information may be acquired from the measurement section 405.

When CSI-specifying information for use for beamforming is obtained from the received signal processing section 404, the control section 401 may decide, based on this information, whether beams are formed based on downlink channel information or uplink channel information.

When an uplink reference signal transmission indication is acquired from the received signal processing section 404, the control section 401 exerts control so that an uplink reference signal (for example, UL-SRS) for uplink channel estimation is transmitted in response to this indication. In this case, the control section 401 exerts control so that uplink channel information that is estimated in the radio base station 10 based on the uplink reference signal is received.

In addition, when various pieces of information reported from the radio base station 10 are acquired from the received signal processing section 404, the control section 401 may update the parameters used for control based on the information.

The transmission signal generation section 402 generates uplink signals (uplink control signals, uplink data signals, uplink reference signals, etc.) based on indications from the control section 401, and outputs these signals to the mapping section 403. The transmission signal generation section 402 can be constituted by a signal generator, a signal generating circuit or signal generating apparatus that can be described based on general understanding of the technical field to which the present invention pertains.

For example, the transmission signal generation section 402 generates uplink control signals related to delivery acknowledgement information, channel state information (CSI) and so on, based on indications from the control section 401. Also, the transmission signal generation section 402 generates uplink data signals based on indications from the control section 401. For example, when a UL grant is included in a downlink control signal that is reported from the radio base station 10, the control section 401 commands the transmission signal generation section 402 to generate an uplink data signal.

The mapping section 403 maps the uplink signals generated in the transmission signal generation section 402 to radio resources based on commands from the control section 401, and outputs the result to the transmitting/receiving sections 203. The mapping section 403 can be constituted by a mapper, a mapping circuit or mapping apparatus that can be described based on general understanding of the technical field to which the present invention pertains.

The received signal processing section 404 performs receiving processes (for example, demapping, demodulation, decoding and so on) of received signals that are input from the transmitting/receiving sections 203. Here, the received signals include, for example, downlink signals (downlink control signals, downlink data signals, downlink reference signals and so on) that are transmitted from the radio base station 10. The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The received signal processing section 404 outputs the decoded information, acquired through the receiving processes, to the control section 401. The received signal processing section 404 outputs, for example, broadcast information, system information, RRC signaling, DCI and so on, to the control section 401. Also, the received signal processing section 404 outputs the received signals and/or the signals after the receiving processes to the measurement section 405.

The measurement section 405 conducts measurements with respect to the received signals. For example, the measurement section 405 performs measurements using downlink reference signals transmitted from the radio base station 10. The measurement section 405 can be constituted by a measurer, a measurement circuit or measurement apparatus that can be described based on general understanding of the technical field to which the present invention pertains.

The measurement section 405 may measure, for example, the received power (for example, RSRP), the received quality (for example, RSRQ, received SINR), down link channel information (for example, CSI) and so on of the received signals. The measurement results may be output to the control section 401.

### (Hardware Structure)

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire or wireless, for example) and using these multiple pieces of apparatus.

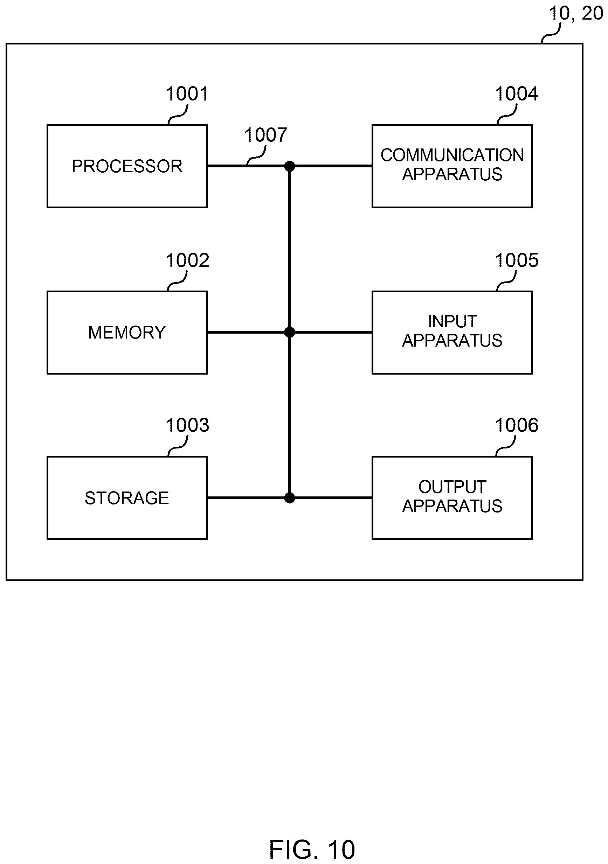

For example, the radio base station, user terminals and so on according to embodiments of the present invention may function as a computer that executes the processes of the radio communication method of the present invention. FIG. 10 is a diagram to show an example hardware structure of a radio base station and a user terminal according to one embodiment of the present invention. Physically, the above-described radio base stations 10 and user terminals 20 may be formed as computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit," "device," "unit" and so on. Note that the hardware structure of a radio base station 10 and a user terminal 20 may be designed to include one or more of each apparatus shown in the drawing, or may be designed not to include part of the apparatus.

For example, although only one processor 1001 is shown, a plurality of processors may be provided. Furthermore, processes may be implemented with one processor, or processes may be implemented in sequence, or in different manners, on two or more processors. Note that the processor 1001 may be implemented with one or more chips.

Each function of the radio base station 10 and the user terminal 20 is implemented by reading predetermined software (program) on hardware such as the processor 1001 and the memory 1002, and by controlling the calculations in the processor 1001, the communication in the communication apparatus 1004, and the reading and/or writing of data in the memory 1002 and the storage 1003.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and others may be implemented by the processor 1001.

Furthermore, the processor 1001 reads programs (program codes), software modules or data, from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory (primary storage apparatus)" and so on. The memory 1002 can store executable programs (program codes), software modules and/and so on for implementing the radio communication methods according to embodiments of the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology used in this specification and the terminology that is needed to understand this specification may be replaced by other terms that convey the same or similar meanings. For example, "channels" and/or "symbols" may be replaced by "signals (or "signaling")." Also, "signals" may be "messages." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency" and so on.

Furthermore, a radio frame may be comprised of one or more periods (frames) in the time domain. Each of one or more periods (frames) constituting a radio frame may be referred to as a "subframe." Furthermore, a subframe may be comprised of one or more slots in the time domain. Furthermore, a slot may be comprised of one or more symbols in the time domain (OFDM (Orthogonal Frequency Division Multiplexing) symbols, SC-FDMA (Single Carrier Frequency Division Multiple Access) symbols, and so on).

A radio frame, a subframe, a slot and a symbol all represent the time unit in signal communication. A radio frame, a subframe, a slot and a symbol may be each called by other applicable names. For example, one subframe may be referred to as a "transmission time interval (TTI)," a plurality of consecutive subframes may be referred to as a "TTI," or one slot may be referred to as a "TTI." That is, a subframe and/or a TTI may be a subframe (1 ms) in existing LTE, may be a shorter period than 1 ms (for example, one to thirteen symbols), or may be a longer period of time than 1 ms.

Here, a TTI refers to the minimum time unit of scheduling in radio communication, for example. For example, in LTE systems, a radio base station schedules the radio resources (such as the frequency bandwidth and transmission power that can be used in each user terminal) to allocate to each user terminal in TTI units. Note that the definition of TTIs is not limited to this. TTIs may be the time unit for transmitting channel-encoded data packets (transport blocks), or may be the unit of processing in scheduling, link adaptation and so on.

A TTI having a time duration of 1 ms may be referred to as a "normal TTI (TTI in LTE Rel. 8 to 12)," a "long TTI," a "normal subframe," a "long subframe," and so on. A TTI that is shorter than a normal TTI may be referred to as a "shortened TTI," a "short TTI," a "shortened subframe," a "short subframe," and so on.

A resource block (RB) is the unit of resource allocation in the time domain and the frequency domain, and may include one or a plurality of consecutive subcarriers in the frequency domain. Also, an RB may include one or more symbols in the time domain, and may be one slot, one subframe or one TTI in length. One TTI and one subframe each may be comprised of one or more resource blocks. Note that an RB may be referred to as a "physical resource block (PRB (Physical RB))," a "PRB pair," an "RB pair," and so on.

Furthermore, a resource block may be comprised of one or more resource elements (REs). For example, one RE may be a radio resource field of one subcarrier and one symbol.

Note that the above-described structures of radio frames, subframes, slots, symbols and so on are merely examples. For example, configurations such as the number of subframes included in a radio frame, the number of slots included in a subframe, the number of symbols and RBs included in a slot, the number of subcarriers included in an RB, the number of symbols in a TTI, the symbol duration and the cyclic prefix (CP) duration can be variously changed.

Also, the information and parameters described in this specification may be represented in absolute values or in relative values with respect to predetermined values, or may be represented in other information formats. For example, radio resources may be specified by predetermined indices. In addition, equations to use these parameters and so on may be used, apart from those explicitly disclosed in this specification.

The names used for parameters and so on in this specification are in no respect limiting. For example, since various channels (PUCCH (Physical Uplink Control CHannel), PDCCH (Physical Downlink Control CHannel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and output via a plurality of network nodes.

The information, signals and so on that are input and/or output may be stored in a specific location (for example, a memory), or may be managed using a management table. The information, signals and so on to be input and/or output can be overwritten, updated or appended. The information, signals and so on that are output may be deleted. The information, signals and so on that are input may be transmitted to other pieces of apparatus.

Reporting of information is by no means limited to the aspects/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)," and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, reporting of predetermined information (for example, reporting of information to the effect that "X holds") does not necessarily have to be sent explicitly, and can be sent implicitly (by, for example, not reporting this piece of information).

Decisions may be made in values represented by one bit (0 or 1), may be made in Boolean values that represent true or false, or may be made by comparing numerical values (for example, comparison against a predetermined value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" or some other suitable terms.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D (Device-to-Device)). In this case, user terminals 20 may have the functions of the radio base stations 10 described above. In addition, terms such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Certain actions which have been described in this specification to be performed by base stations may, in some cases, be performed by higher nodes. In a network comprised of one or more network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in this specification may be used individually or in combinations, which may be switched depending on the mode of implementation. The order of processes, sequences, flowcharts and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to systems that use LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods, and/or next-generation systems that are enhanced based on these.

The phrase "based on" as used in this specification does not mean "based only on," unless otherwise specified. In other words, the phrase "based on" means both "based only on" and "based at least on."

Reference to elements with designations such as "first," "second" and so on as used herein does not generally limit the number/quantity or order of these elements. These designations are used herein only for convenience, as a method of distinguishing between two or more elements. In this way, reference to the first and second elements does not imply that only two elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure), ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be interpreted as "access. As used herein, two elements may be considered "connected" or "coupled" to each other by using one or more electrical wires, cables and/or printed electrical connections, and, as a number of non-limiting and non-inclusive examples, by using electromagnetic energy, such as electromagnetic energy having wavelengths in the radio frequency, microwave regions and optical (both visible and invisible) regions.

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the scope of the present invention defined by the recitations of claims. Consequently, the description herein is provided only for the purpose of explaining examples, and should by no means be construed to limit the present invention in any way.

## Claims

1. A terminal (20) in communication with a base station (10), the terminal comprising:
a control section (401) configured to control formation of a beam for use in transmitting an uplink signal; **characterized by** further comprising
a transmission section (203) configured to transmit information about a characteristic of a terminal transmitter/receiver related to frequency representing the degree of difference between the frequency characteristics of the transmitter and the receiver,
wherein, the control section (401) is further configured to determine, from information received from the base station (10) based on the information about the characteristic of the terminal transmitter/receiver related to frequency, whether the beam is to be formed based on downlink channel information or the beam is to be formed based on uplink channel information corresponding to an uplink Sounding Reference Signal, SRS.

2. A radio communication method for a terminal in communication with a base station, the method comprising:
controlling formation of a beam for use in transmitting an uplink signal;
**characterized by** further comprising
transmitting (S201) information about a characteristic of a terminal transmitter/receiver related to frequency representing the degree of difference between the frequency characteristics of the transmitter and the receiver,
wherein it is determined (S206), from information received from the base station based on the information about the characteristic of the terminal transmitter/receiver related to frequency, whether the beam is to be formed based on downlink channel information (S102) or the beam is to be formed based on uplink channel information corresponding to an uplink Sounding Reference Signal, SRS.

3. A base station (10) in communication with a terminal (20) comprising:
a receiving section (103) configured to receive information about a characteristic of a terminal transmitter/receiver related to frequency representing the degree of difference between the frequency characteristics of the transmitter and the receiver,
a transmitting section (103) configured to transmit, to the terminal (20), information based on the information about the characteristic of the terminal transmitter/receiver related to frequency to determine whether a beam for use in transmitting an uplink signal is to be formed based on downlink channel information or the beam is to be formed based on uplink channel information corresponding to an uplink Sounding Reference Signal, SRS.

4. A system (1) comprising:
a terminal (20) in communication with a base station (10) configured to comprise:
a control section (401) configured to control formation of a beam for use in transmitting an uplink signal; **characterized by** further comprising
a transmission section (203) configured to transmit information about a characteristic of a terminal transmitter/receiver related to frequency representing the degree of difference between the frequency characteristics of the transmitter and the receiver,
wherein, the control section (401) is further configured to determine, from information received from the base station based on the information about the characteristic of the terminal transmitter/receiver related to frequency, whether the beam is to be formed based on downlink channel information or the beam is to be formed based on uplink channel information corresponding to an uplink Sounding Reference Signal, SRS; and
the base station (10) configured to comprises:
a receiving section (103) configured to receive the information about the characteristic of the terminal transmitter/receiver related to frequency,
a transmitting section (103) configured to transmit, to the terminal (20), the information based on the information about the characteristic of the terminal transmitter/receiver related to frequency.

## Patentansprüche

1. Endgerät (20), das mit einer Basisstation (10) in Kommunikation steht, wobei das Endgerät umfasst:
einen Steuerabschnitt (401), der so ausgelegt ist, dass er die Bildung eines Strahls zur Verwendung bei der Übertragung eines Aufwärtsstreckensignals steuert; **dadurch gekennzeichnet, dass** es weiter umfasst
einen Sendeabschnitt (203), der so ausgelegt ist, dass er Informationen über eine frequenzbezogene Charakteristik eines Senders/Empfängers des Endgeräts, die den Differenzgrad zwischen den Frequenzcharakteristiken des Senders und des Empfängers darstellt, überträgt,
wobei der Steuerabschnitt (401) weiter so ausgelegt ist, dass er anhand von von der Basisstation (10) empfangenen, auf den Informationen über die frequenzbezogene Charakteristik des Senders/Empfängers des Endgeräts basierenden Informationen bestimmt, ob der Strahl auf Basis von Abwärtsstreckenkanal-Informationen gebildet werden soll, oder der Strahl auf Basis von Aufwärtsstreckenkanal-Informationen, die einem Aufwärtsstrecken-Sounding Reference Signal, SRS, entsprechen, gebildet werden soll.

2. Funkkommunikationsverfahren für ein Endgerät, das mit einer Basisstation in Kommunikation steht, wobei das Verfahren umfasst:
Steuern der Bildung eines Strahls zur Verwendung bei der Übertragung eines Aufwärtsstreckensignals;
**dadurch gekennzeichnet, dass** es weiter umfasst
Übertragen (S201) von Informationen über eine frequenzbezogene Charakteristik eines Senders/Empfängers des Endgeräts, die den Differenzgrad zwischen den Frequenzcharakteristiken des Senders und des Empfängers darstellt,
wobei anhand von von der Basisstation empfangenen, auf den Informationen über die frequenzbezogene Charakteristik des Senders/Empfängers des Endgeräts basierenden Informationen bestimmt wird (S206), ob der Strahl auf Basis von Abwärtsstreckenkanal-Informationen gebildet werden soll (S102), oder der Strahl auf Basis von Aufwärtsstreckenkanal-Informationen, die einem Aufwärtsstrecken-Sounding Reference Signal, SRS, entsprechen, gebildet werden soll.

3. Basisstation (10), die mit einem Endgerät (20) in Kommunikation steht, umfassend:
einen Empfangsabschnitt (103), der so ausgelegt ist, dass er Informationen über eine frequenzbezogene Charakteristik eines Senders/Empfängers des Endgeräts empfängt, die den Differenzgrad zwischen den Frequenzcharakteristiken des Senders und des Empfängers darstellt,
einen Sendeabschnitt (103), der so ausgelegt ist, dass er auf den Informationen über die frequenzbezogene Charakteristik des Senders/Empfängers des Endgeräts basierende Informationen an das Endgerät (20) überträgt, um zu bestimmen, ob ein Strahl zur Verwendung bei der Übertragung eines Aufwärtsstreckensignals auf Basis von Abwärtsstreckenkanal-Informationen gebildet werden soll, oder der Strahl auf Basis von Aufwärtsstreckenkanal-Informationen, die einem Aufwärtsstrecken-Sounding Reference Signal, SRS, entsprechen, gebildet werden soll.

4. System (1), umfassend:
ein Endgerät (20), das mit einer Basisstation (10) in Kommunikation steht und so ausgelegt ist, dass es umfasst:
einen Steuerabschnitt (401), der so ausgelegt ist, dass er die Bildung eines Strahls zur Verwendung bei der Übertragung eines Aufwärtsstreckensignals steuert; **dadurch gekennzeichnet, dass** es weiter umfasst
einen Sendeabschnitt (203), der so ausgelegt ist, dass er Informationen über eine frequenzbezogene Charakteristik eines Senders/Empfängers des Endgeräts, die den Differenzgrad zwischen den Frequenzcharakteristiken des Senders und des Empfängers darstellt, überträgt,
wobei der Steuerabschnitt (401) weiter so ausgelegt ist, dass er anhand von von der Basisstation empfangenen, auf den Informationen über die frequenzbezogene Charakteristik des Senders/Empfängers des Endgeräts basierenden Informationen bestimmt, ob der Strahl auf Basis von Abwärtsstreckenkanal-Informationen gebildet werden soll, oder der Strahl auf Basis von Aufwärtsstreckenkanal-Informationen, die einem Aufwärtsstrecken-Sounding Reference Signal, SRS, entsprechen, gebildet werden soll; und
die Basisstation (10), die so ausgelegt ist, dass sie umfasst:
einen Empfangsabschnitt (103), der so ausgelegt ist, dass er die Informationen über die frequenzbezogene Charakteristik des Senders/Empfängers des Endgeräts empfängt,
einen Sendeabschnitt (103), der so ausgelegt ist, dass er die auf den frequenzbezogenen Informationen über die Charakteristik des Senders/Empfängers des Endgeräts basierenden Informationen an das Endgerät (20) überträgt.

## Revendications

1. Terminal (20) en communication avec une station de base (10), le terminal comprenant :
une section de commande (401) configurée pour commander une formation d'un faisceau destiné à être utilisé dans une transmission d'un signal en liaison montante; **caractérisé en ce qu'**il comprend en outre
une section de transmission (203) configurée pour transmettre des informations relatives à une caractéristique d'un émetteur-récepteur de terminal liée à une fréquence représentant le degré de différence entre les caractéristiques de fréquence de l'émetteur et du récepteur,
dans lequel la section de commande (401) est en outre configurée pour déterminer, à partir d'informations reçues depuis la station de base (10) sur la base des informations relatives à la caractéristique de l'émetteur-récepteur de terminal liée à une fréquence, si le faisceau doit être formé sur la base d'informations de canal en liaison descendante ou si le faisceau doit être formé sur la base d'informations de canal en liaison montante correspondant à un signal de référence de sondage, SRS, en liaison montante.

2. Procédé de communication radio pour un terminal en communication avec une station de base, le procédé comprenant :
la commande d'une formation d'un faisceau destiné à être utilisé dans une transmission d'un signal en liaison montante ;
**caractérisé en ce qu'**il comprend en outre
la transmission (S201) d'informations relatives à une caractéristique d'un émetteur-récepteur de terminal liée à une fréquence représentant le degré de différence entre les caractéristiques de fréquence de l'émetteur et du récepteur,
dans lequel il est déterminé (S206), à partir d'informations reçues depuis la station de base sur la base des informations relatives à la caractéristique de l'émetteur-récepteur de terminal liée à une fréquence, si le faisceau doit être formé sur la base d'informations de canal en liaison descendante (S102) ou si le faisceau doit être formé sur la base d'informations de canal en liaison montante correspondant à un signal de référence de sondage, SRS, en liaison montante.

3. Station de base (10) en communication avec un terminal (20) comprenant :
une section de réception (103) configurée pour recevoir des informations relatives à une caractéristique d'un émetteur-récepteur de terminal liée à une fréquence représentant le degré de différence entre les caractéristiques de fréquence de l'émetteur et du récepteur,
une section de transmission (103) configurée pour transmettre, au terminal (20), des informations sur la base des informations relatives à la caractéristique de l'émetteur-récepteur de terminal liée à une fréquence pour déterminer si un faisceau destiné à être utilisé dans la transmission d'un signal en liaison montante doit être formé sur la base d'informations de canal en liaison descendante ou si le faisceau doit être formé sur la base d'informations de canal en liaison montante correspondant à un signal de référence de sondage, SRS, en liaison montante.

4. Système (1) comprenant :
un terminal (20) en communication avec une station de base (10) configuré pour comprendre :
une section de commande (401) configurée pour commander une formation d'un faisceau destiné à être utilisé dans une transmission d'un signal en liaison montante ; **caractérisé en ce qu'**il comprend en outre
une section de transmission (203) configurée pour transmettre des informations relatives à une caractéristique d'un émetteur-récepteur de terminal liée à une fréquence représentant le degré de différence entre les caractéristiques de fréquence de l'émetteur et du récepteur,
dans lequel la section de commande (401) est en outre configurée pour déterminer, à partir d'informations reçues depuis la station de base sur la base des informations relatives à la caractéristique de l'émetteur-récepteur de terminal liée à une fréquence, si le faisceau doit être formé sur la base d'informations de canal en liaison descendante ou si le faisceau doit être formé sur la base d'informations de canal en liaison montante correspondant à un signal de référence de sondage, SRS, en liaison montante ; et
la station de base (10) étant configurée pour comprendre :
une section de réception (103) configurée pour recevoir les informations relatives à la caractéristique de l'émetteur-récepteur de terminal liée à une fréquence,
une section de transmission (103) configurée pour transmettre, au terminal (20), les informations sur la base des informations relatives à la caractéristique de l'émetteur-récepteur de terminal liée à une fréquence.
